# EUROPÄISCHE PATENTANMELDUNG

(11) **EP 0 728 901 A2**
(43) Veröffentlichungstag der Anmeldung: **28.08.1996**
(21) Anmeldenummer: 96101730.8
(22) Anmeldetag: 07.02.1996
(51) Int. Cl.: E06B 7/23

(54) **Dichtungsprofil, insbesondere für Fenster oder Klappflügel im Glasfassadenbau**

(30) Priorität: 25.02.1995 DE 29503194 U
(71) Anmelder: Firma J. Eberspächer, D-73730 Esslingen (DE)
(72) Erfinder: Hurth, Perumal, D-70376 Stuttgart (DE)

(57) **Zusammenfassung**

Die vorliegende Erfindung bezieht sich auf ein Dichtungsprofil (1) aus elastischem Dichtungsmaterial, insbesondere für Fenster oder Klappflügel im Glasfassadenbau. Zwecks Schaffung eines derartigen Dichtungsprofils, welches einfach aufgebaut ist und im montierten Zustand einer Anordnung nicht nur einen schmalen, sondern auch einen vergleichsweise größeren Luftspalt zuverlässig abdichtet, ist dieses erfindungsgemäß gekennzeichnet durch eine Profilleiste (2) mit zumindest zwei Dichtlippen (3, 4) und zumindest einer zwischengeordneten Umlenkstelle (5), wobei die beiden Dichtlippen (3, 4) aus einer im wesentlichen gestreckten Lage (A) um die Umlenkstelle(n) (5) in eine im wesentlichen hochgestellte Lage (B) geklappt werden können.

## Beschreibung

Die Erfindung betrifft ein Dichtungsprofil aus elastischem Dichtungsmaterial, insbesondere für Fenster oder Klappflügel im Glasfassadenbau.

Nach dem Stand der Technik kennt man bei Fenstern, Flügeln und Glasfassaden, wo unterschiedlich dicke Glasscheiben eingebaut werden, entsprechend gestaltete Dichtungsprofile, die der individuellen Dicke der einzubauenden Glasscheibe Rechnung tragen. Entsprechend der Dicke der einzubauenden Glasscheibe findet das zugehörige Dichtungsprofil Verwendung.

Aufgabe der Erfindung ist die Schaffung eines Dichtungsprofils der eingangs genannten Art, welches einfach aufgebaut ist und im montierten Zustand einer Anordnung nicht nur einen schmalen, sondern auch einen vergleichsweise größeren Luftspalt zuverlässig abdichtet.

Gelöst wird die der Erfindung zugrundeliegende Aufgabe durch ein Dichtungsprofil der im Anspruch 1 angegebenen Art.

Vorteilhaft weitergebildet wird das Dichtungsprofil nach den Unteransprüchen 2 bis 11.

Wesen der Erfindung ist ein Dichtungsprofil in Form einer Profilleiste mit zumindest zwei Dichtlippen und zumindest einer zwischengeordneten Umlenkstelle, wobei die beiden Dichtlippen aus einer im wesentlichen gestreckten Lage um die Umlenkstelle(n) in eine im wesentlichen hochgestellte Lage geklappt werden können.

Zweckmäßigerweise ist die Profilleiste einstückig ausgebildet.

Die Umlenkstelle ist bevorzugt ein Schmalbereich der Profilleiste, der insbesondere auf der Außenseite, welche der Klappseite der Profilleiste entgegengesetzt ist, eine Einkerbung in Längsrichtung der Profilleiste besitzt.

Bevorzugt umfaßt die Profilleiste auf der Klappseite zumindest einen Abstützungssockel, der in einem Abstützungseingriff mit einer umgeklappten Dichtlippe bringbar ist. Der Abstützungssockel besitzt ein rauhes Profil, insbesondere ein Sägezahn- oder Rillenprofil, welches bei einer umgeklappten Dichtlippe mit einem Gegenabstützungsbereich dieser Dichtlippe in einen formschlüssigen Eingriff bringbar ist.

Zwei umgeklappte Dichtlippen sind bei einer Ausführungsvariante im wesentlichen gleich lang ausgebildet und verlaufen parallel zueinander, insbesondere im eingebauten Zustand einer Anordnung schräg zur Abdichtungsstelle, jedoch vergleichsweise steil.

Für eine gute und einfache Befestigung besitzt die Profilleiste in vorteilhafter Weiterbildung der Erfindung auf der der Klappseite entgegengesetzten Außenseite ein Befestigungsprofil, welches in einen formschlüssigen Eingriff mit einer Stützleiste bringbar ist. Das Befestigungsprofil ist zweckmäßigerweise eine Längsaussparung und/oder ein Längsvorsprung der Profilleiste.

Durch die Erfindung kann mithin bei einem einzigen Dichtungsprofil ein unterschiedlicher Luftspalt zuverlässig abdichtend überbrückt werden. Zwei Dichtlippen der Profilleiste können insbesondere in zwei unterschiedlichen Lagen montiert werden: in einer im wesentlichen gestreckten Lage einer Profilleiste, bei der der abzudichtende Luftspalt vergleichsweise klein ist, und in einer im wesentlichen hochgestellten Lage, bei der der abzudichtende Luftspalt vergleichsweise groß ist. Um die letztgenannte hochgestellte Lage einzurichten, wird bevorzugt eine der beiden Dichtlippen um die Umlenkstelle, welche bevorzugt ein Schmalbereich der Profilleiste ist, in Richtung der anderen Dichtlippe geklappt. In der umgeklappten Lage stützt sich die Dichtlippe auf einem Abstützungssockel ab, so daß trotz Elastizität des Dichtungsprofils eine große Abdichtkraft bei einem breiten Luftspalt eingerichtet werden kann.

Gegebenenfalls kann nicht nur eine einzige Dichtlippe um eine Schwenkstelle in Richtung eines zugeordneten Abstützsockels geklappt werden, sondern auch die andere Dichtlippe auf einen entsprechenden Abstützungssockel, so daß beide Dichtlippen genügend Dichtkraft bei einer großen Spaltbreite hervorrufen. Für ein Umklappen beider Dichtlippen werden diese aufeinander zu bewegt und in die neue Abdichtstellung gebracht.

Durch die Erfindung kann die Anzahl erforderlicher Dichtungen bei einer bestimmten Konstruktion, insbesondere im Glasfassadenbau, deutlich reduziert werden. Glastoleranzen können besser überbrückt werden.

Die Erfindung wird nachfolgend anhand eines Ausführungsbeispiels unter Bezugnahme auf die beigefügte Zeichnung näher erläutert; es zeigen:
- Fig. 1: ein Dichtungsprofil mit zwei Dichtlippen in einer im wesentlichen gestreckten Einbaulage, und
- Fig. 2: das Dichtungsprofil nach Fig. 1 in einer im wesentlichen hochgestellten zweiten Einbaulage.

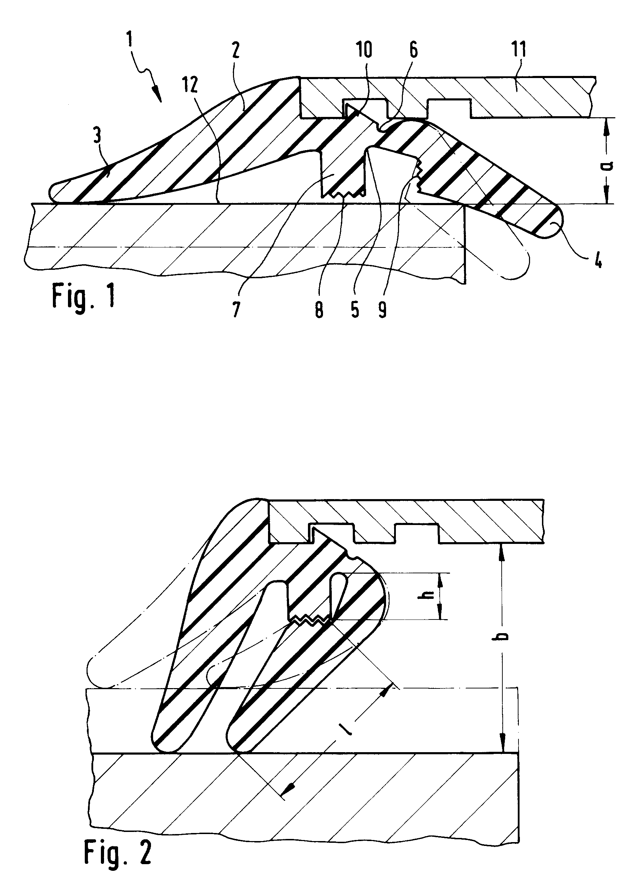

Ein Dichtungsprofil 1 besteht aus einer einstückigen, im wesentlichen flach ausgebildeten Profilleiste 2 und besitzt an ihren Längsrändern gemäß Fig. 1 eine erste Dichtlippe 3 und auf der anderen Seite eine zweite Dichtlippe 4.

Zwischen den beiden Dichtlippen 3, 4 ist eine Umlenkstelle 5 in Form eines Schmalbereiches des Dichtungsprofils vorgesehen. Im Bereich dieser Umlenkstelle 5 befindet sich auf der Außenseite des Dichtungsprofils 1, welches der Stützleiste 11 des Dichtungsprofils zugeordnet ist, eine in Längsrichtung des Dichtungsprofils verlaufende Einkerbung 6.

Zwischen den beiden Dichtlippen 3, 4 besitzt die Profilleiste 2 einen integriert ausgebildeten Abstützungssockel 7. Der Abstützungsbereich des Abstützungssockels 7 ist ein rauhes Profil, insbesondere ein Sägezahnprofil, welches in einen formschlüssigen Eingriff mit einem Gegenabstützungsbereich 9 der zweiten Dichtlippe 4 gebracht werden kann, wenn die zweite Dichtlippe 4 gemäß Fig. 1 aus der gestreckten Lage A des Dichtungsprofils in die hochgestellte Lage B gemäß Fig. 2 geklappt wird. In der hochgestellten Lage der zweiten Dichtlippe 4 verlaufen beide Dichtlippen 3, 4 im wesentlichen parallel zueinander. Die abgestützte Länge 1 der zweiten Dichtlippe 4 ist bevorzugt doppelt so groß wie die Höhe h des Abstützungssockels 7. Sowohl in der gestreckten Lage A eines Dichtungsprofils 1 gemäß Fig. 1, bei dem ein schmaler Luftspalt a überbrückt wird, als auch in der hochgestellten Lage B gemäß Fig. 2, bei der ein vergleichsweise großer Luftspalt b überbrückt wird, ist das Dichtungsprofil 1 mit ihrem außenseitigen Befestigungsprofil 10 fest mit der zugehörigen Stützleiste 11 verankert. Gegebenenfalls können mehrere Befestigungspositionen an einer Stützleiste 11 für ein Dichtungsprofil 1 vorgesehen sein.

Der Abstützungssockel 7 steht bezüglich der Abstützungsfläche 12 gemäß Fig. 1 in einem geringfügigen Abstand, um das Dichtungsprofil 1 gemäß Fig. 1 bei vorgegebener Lage einer Stützleiste 11 und einer Abstützungsfläche 12 montieren, d.h. seitlich in den Luftspalt a einfügen zu können.

Beispielsweise kann durch das veranschaulichte Dichtungsprofil 1 im Glasfassadenbau eine Spaltbreite von 4 bis 10 mm überbrückt werden, und zwar mit einer einzigen Dichtung. Nach dem Stand der Technik benötigt man hierzu drei Dichtungen, von denen die eine das Spaltmaß von 4 bis 5 mm, die zweite das Spaltmaß von 6 bis 7 mm und die dritte das Spaltmaß von 8 bis 10 mm abdeckt.

Es sei noch angemerkt, daß in den Unteransprüchen enthaltene selbständig schutzfähige Merkmale trotz der vorgenommenen formalen Rückbeziehung auf den Hauptanspruch entsprechenden eigenständigen Schutz haben sollen. Im übrigen fallen sämtliche in den gesamten Anmeldungsunterlagen enthaltenen erfinderischen Merkmale in den Schutzumfang der Erfindung.

## Patentansprüche

1. Dichtungsprofil (1) aus elastischem Dichtungsmaterial, insbesondere für Fenster oder Klappflügel im Glasfassadenbau,
gekennzeichnet durch
eine Profilleiste (2) mit zumindest zwei Dichtlippen (3,4) und zumindest einer zwischengeordneten Umlenkstelle (5), wobei die beiden Dichtlippen (3,4) aus einer im wesentlichen gestreckten Lage (A) um die Umlenkstelle(n) (5) in eine im wesentlichen hochgestellte Lage (B) geklappt werden können.

2. Dichtungsprofil nach Anspruch 1,
dadurch gekennzeichnet,
daß die Profilleiste (2) einstückig ausgebildet ist.

3. Dichtungsprofil nach Anspruch 2,
dadurch gekennzeichnet,
daß die Umlenkstelle (5) ein Schmalbereich der Profilleiste (2) ist.

4. Dichtungsprofil nach Anspruch 3,
dadurch gekennzeichnet,
daß der Schmalbereich eine Einkerbung (6) besitzt, welche auf der der Klappseite entgegengesetzten Außenseite der Profilleiste (2) liegt.

5. Dichtungsprofil nach einem der Ansprüche 1 bis 4,
dadurch gekennzeichnet,
daß die Profilleiste (2) auf der Klappseite zumindest einen Abstützungssockel (7) aufweist, der in einen Abstützungseingriff mit einer umgeklappten Dichtlippe (4) bringbar ist.

6. Dichtungsprofil nach Anspruch 5,
dadurch gekennzeichnet,
daß der Abstützungssockel (7) ein rauhes Profil (8) besitzt.

7. Dichtungsprofil nach Anspruch 6,
dadurch gekennzeichnet,
daß der Gegenabstützungsbereich (9) einer umgeklappten Dichtlippe (4) in einem formschlüssigen Eingriff mit dem Abstützungssockel (7) steht.

8. Dichtungsprofil nach einem der Ansprüche 5 bis 7,
dadurch gekennzeichnet,
daß die abgestützte Länge (1) einer umgeklappten Dichtlippe (4) in etwa doppelt so groß ist wie die Höhe (h) des Abstützungssockels (7).

9. Dichtungsprofil nach einem der Ansprüche 1 bis 8,
dadurch gekennzeichnet,
daß zwei umgeklappte Dichtlippen (3, 4) im wesentlichen gleich lang ausgebildet sind und im wesentlichen parallel zueinander verlaufen (Fig. 2).

10. Dichtungsprofil nach einem der Ansprüche 1 bis 9,
dadurch gekennzeichnet,
daß auf der der Klappseite entgegengesetzten Außenseite der Profilleiste (2) ein Befestigungsprofil (10) vorgesehen ist, welches in einen formschlüssigen Befestigungseingriff mit einer Stützleiste (11) bringbar ist.

11. Dichtungsprofil nach Anspruch 10,
dadurch gekennzeichnet,
daß das Befestigungsprofil eine Längsaussparung und/oder ein Längsvorsprung der Profilleiste (2) ist.
